# EUROPEAN PATENT SPECIFICATION

(11) **EP 3 744 628 B1**
(45) Date of publication and mention of the grant of the patent: **17.01.2024**
(21) Application number: 19382448.9
(22) Date of filing: 31.05.2019
(51) Int. Cl.: B64C 9/34, B64C 9/14, B64C 23/06

(54) **SYSTEM FOR RE-ENERGIZING STREAMFLOW IN CONTROL SURFACES OF AIRCRAFTS**
SYSTEM ZUR ERNEUTEN ERREGUNG DER ANSTRÖMUNG IN STEUERFLÄCHEN VON FLUGZEUGEN
SYSTÈME DE RE-ÉNERGISATION DE L'ÉCOULEMENT DANS LES SURFACES DE COMMANDE DES AÉRONEFS

(43) Date of publication of application: 02.12.2020
(73) Proprietor: Airbus Operations, S.L.U., 28906 Getafe (Madrid) (ES)
(72) Inventor: JARA RODELGO, Álvaro, 28906 Getafe (Madrid) (ES); PARRA RUBIO, Alfonso, 28906 Getafe (Madrid) (ES)
(74) Representative: Herrero & Asociados, S.L.

(56) References cited:
- EP-A1- 3 348 472
- WO-A1-90/11929
- WO-A1-91/01178
- WO-A1-2015/091797
- JP-A- 2008 094 177
- US-A- 5 253 828
- US-A1- 2013 255 796
- KHANJIAN ASSADOUR ET AL: "Effect of rectangular winglet pair roll angle on the heat transfer enhancement in laminar channel flow", INTERNATIONAL JOURNAL OF THERMAL SCIENCES, EDITIONS ELSEVIER, PARIS, FR, vol. 114, 20 December 2016 (2016-12-20), pages 1-14, XP029901293, ISSN: 1290-0729, DOI: 10.1016/J.IJTHERMALSCI.2016.12.010

## Description

The present invention refers to a system able to hide and unhide aerodynamic elements for re-energizing streamflow in control surfaces of aircrafts. The main feature of the present invention is that the surface when bended, it will create an edge shape who will act as a vortex generator.

### Background of the invention

In aircrafts aerodynamic elements are used to re-energize streamflow in their control surfaces. These aerodynamic elements create an edge shape that acts as a vortex generator.

These aerodynamic elements that act as vortex generators can be divided in two types: fixed systems and hide/unhide system.

The fixed systems used to re-energize the streamflow consist on the generation of a small quantity of lift with a small flat aerodynamic element aligned with the streamlines, but with a very low angle of attack that generates a high energy vortex. This energy vortex is able to follow the control surface increasing the efficiency of it.

These aerodynamic elements are permanent, so they create a benefit when re-energization is needed, increasing the efficiency of an empennage for example up to a 16% more, but also, when they are not needed, they generate a drag penalty, for example, in cruise conditions.

The hide/unhide systems are active systems able to show the aerodynamic elements only when they are needed. The main advantage is that they avoid creating a penalty in drag in cruise condition but, on the other hand, this system requires maintenance, which creates a conflict with airlines, occupy volume in a critical zone and they use to be very complex.

The location of the aerodynamic elements is between a fixed part and the movable part (control surfaces). Due to the actual state of the art of manufacturing processes, this transition zone used to be rigid in the actual state of the art.

WO2015091797A1 discloses a wind turbine blade, as well as a trailing edge plate for a wind turbine blade. A flexible flow modulation device, e.g. an acoustic flap or a plurality of serrations, is arranged at the trailing edge of a wind turbine blade, wherein the flexible device is coupled to at least one aerodynamic device, preferably vortex generators. As the flexible device is bent by action of flow over the wind turbine blade, the at least one aerodynamic device is deployed to provide for attached flow over the bent flexible device.

WO9011929A1 discloses a generally V-shaped device that is installed on a surface over which there is a flowing medium whose viscosity causes a boundary layer to form between free-stream medium and the surface. The point of the V shape generator is oriented facing the down stream direction.

Therefore, one purpose of the present invention is to provide a system for re-energizing streamflow that combines the advantages of the fixed and hide/unhide systems, providing a passive hide/unhide system.

### Description of the invention

With the system according to the present invention it is possible to solve said drawbacks, providing other advantages that are described below.

The system for re-energizing streamflow in control surfaces of aircrafts according to the present invention is defined in claim 1.

Furthermore, said panel is flexible, so that the panel can be curved during some phases of use of the aircraft.

Advantageously, in the use position, the aerodynamic element defines a deflection angle with respect to the panel, said deflection angle being variable.

The movable end has a pointed shape, such as, for example, an arrow shape, even though it can be of any suitable shape.

The value of the present invention resides in the way that the aerodynamic elements that generate lift are activated.

These aerodynamic elements are placed in a zone where one or more curvatures will be generated, and this curvature is the one which generates shapes who will behave as vortex generators.

The main advantage of the present invention is that it is a passive system able to hide and unhide the aerodynamic elements in order to be used only when it is necessary, so the penalty at cruise conditions is avoided.

The main advantage versus systems that hides and unhide the aerodynamic elements is that this system is passive, i.e. it does not require any maintenance and it does not occupy space in the zone between the torsion box and the control surface, a zone which uses to be very crowded.

### Brief description of the drawings

For a better understanding the above explanation and for the sole purpose of providing an example, some non-limiting drawings are included that schematically depict a practical embodiment.
Figure 1 is a perspective of a portion of a wing of an aircraft, showing an aerodynamic element of the system according to the present invention placed between a control surface and a torsion box;

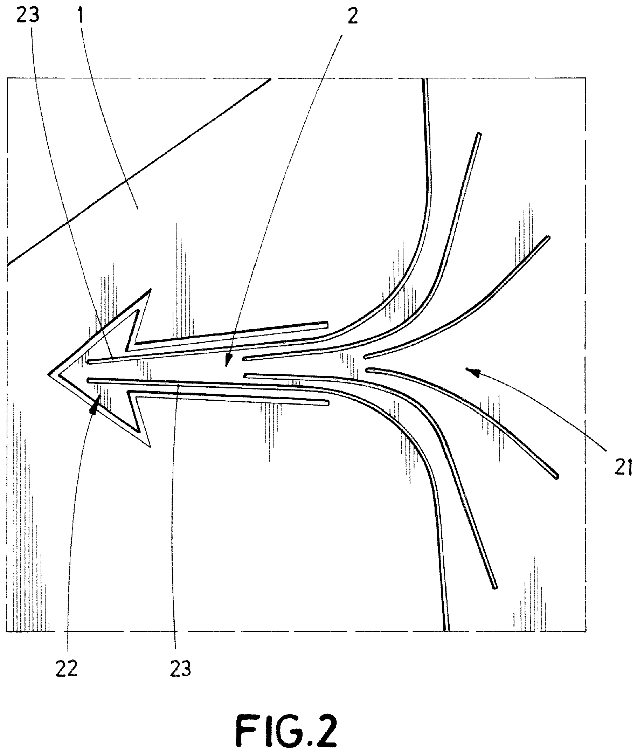

Figure 2 is a perspective view of an aerodynamic element of the system according to the present in its rest position;
Figure 3 is a perspective view of the aerodynamic element shown in Figure 2 in its use position; and
Figures 4-6 are perspective view showing different positions of an aerodynamic element of the system according to the present invention.

### Description of a preferred embodiment

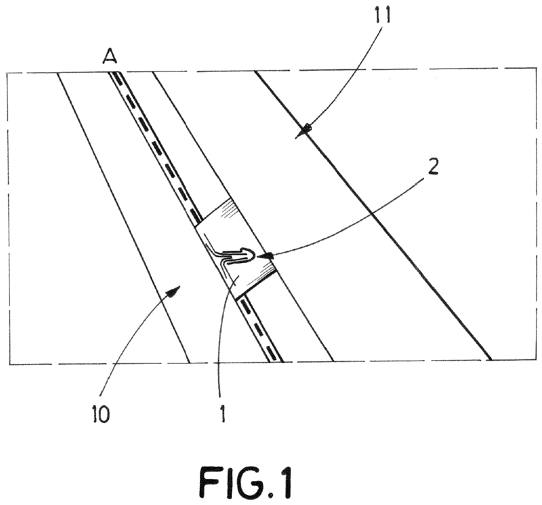

As shown in Figure 1, the system according to the present invention is preferably used in a wing of an aircraft, in particular in a zone between a control surface 10 and a torsion box 11, where a panel 1 is placed.

Said panel 1 is made from a flexible material that can be curved during some phases of use of the aircraft and said panel 1 comprises at least one aerodynamic element 2, which can be placed passively, i.e. automatically, in its use position acting as a vortex generator or in its rest position, as will be described hereinafter.

Said aerodynamic element 2 is a die-cut portion of said flexible panel 1, which is hinged to the rest of the panel 1, defining a fixed end 21 and a movable end 22.

The fixed end 21 defines a control line A, shown in Figure 1, as a hinge axis, and the movable end 22 can be moved between said use and rest positions, defining a deflection angle α with respect to the flexible panel 1.

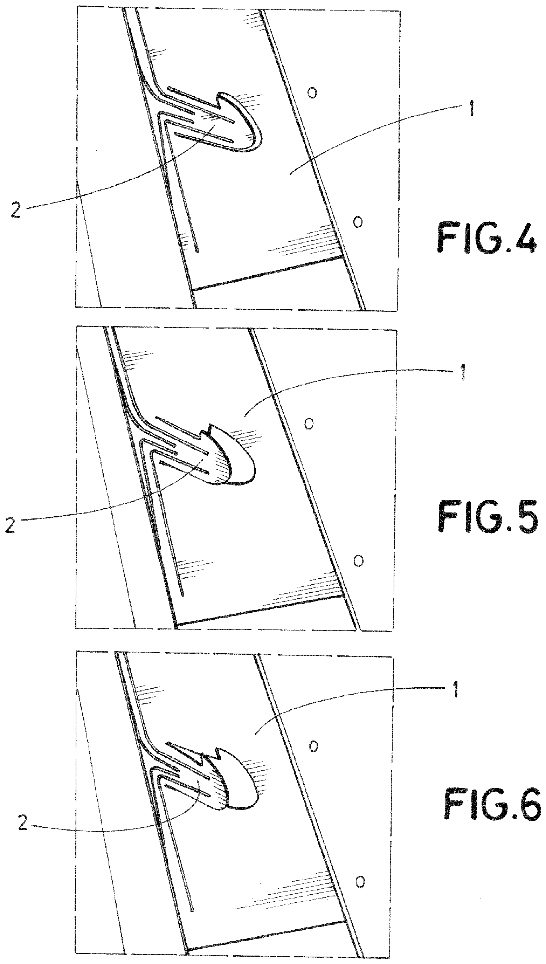

As shown particularly in Figures 4-6, said deflection angle α is variable depending on the use conditions.

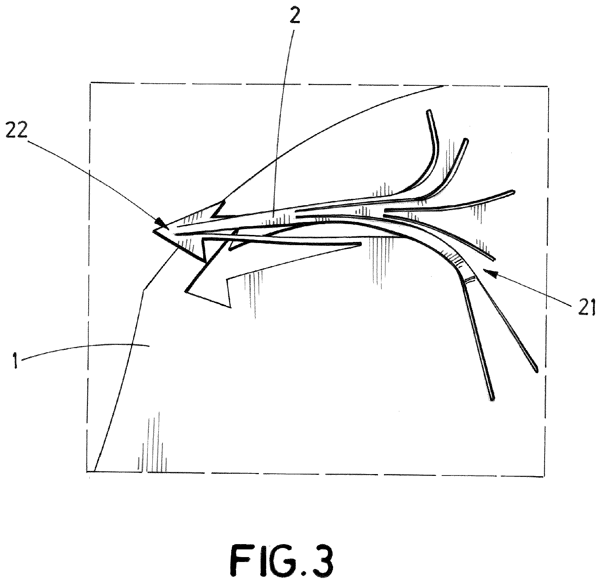

The aerodynamic element 2 also comprise at least one longitudinal slot 23, as shown particularly in Figure 3, and its fixed end 21 is divided in a plurality of sections, from which said longitudinal slot(s) 23 can be defined.

As shown in the Figures, the movable end 22 of the aerodynamic element 2 has preferably a pointed shaped, such as e.g. an arrow shape, even though said movable end 22 can be made of any suitable shape.

The operation of the re-energizing streamflow system according to the present invention is very simple.

In certain conditions of the aircraft, e.g. in cruise conditions, the aerodynamic element(s) 2 is(are) in the rest position, i.e. hidden, not protruding from the panel 1.

In other conditions of the aircraft where the vortex generators are necessary, the aerodynamic element(s) is(are) in the use position, i.e. unhidden or protruding from the panel 1.

This change of position is made in a passive way, i.e. automatically thanks to the flexibility of the panel 1 and of the aerodynamic element(s) 2.

Therefore, as stated previously the system permits to hide and unhide the aerodynamic element(s) 2 in order to be used only when it is necessary, so the penalty at cruise conditions is avoided.

## Claims

1. System for re-energizing streamflow in control surfaces of aircrafts, comprising a panel (1) provided with at least one aerodynamic element (2), said aerodynamic element (2) being movable at least between a rest position, where the at least one aerodynamic element (2) does not protrude from the panel (1), and a use position, where the at least one aerodynamic element (2) protrudes from the panel (1), acting as a vortex generator, said at least one aerodynamic element (2) being a die-cut portion of said panel (1) that is hinged to the rest of said panel (1),
wherein the aerodynamic element (2) comprises a fixed end (21) joined to the panel (1), said fixed end (21) defining a control line (A), and a movable end (22),
**characterized in that** the aerodynamic element (2) comprises at least one longitudinal slot (23), and **in that** the fixed end (21) is divided in a plurality of sections, said at least one longitudinal slot (23) being defined by said sections in which the fixed end (21) is divided.

2. System for re-energizing streamflow in control surfaces of aircrafts according to claim 1, wherein in the use position, the aerodynamic element (2) defines a deflection angle (α) with respect to the panel.

3. System for re-energizing streamflow in control surfaces of aircrafts according to claim 2, wherein said deflection angle (α) is variable.

4. System for re-energizing streamflow in control surfaces of aircrafts according to claim 1, wherein the movable end (22) has a pointed shape.

## Patentansprüche

1. System zur erneuten Erregung der Anströmung in Steuerflächen von Flugzeugen, mit einem Paneel (1), das mit mindestens einem aerodynamischen Element (2) bereitgestellt ist, wobei das aerodynamische Element (2) mindestens zwischen einer Ruheposition, in der das mindestens eine aerodynamische Element (2) nicht aus dem Paneel (1) vorsteht, und einer Einsatzposition, in der das mindestens eine aerodynamische Element (2) aus dem Paneel (1) vorsteht und als Wirbelerzeuger wirkt, beweglich ist, wobei das mindestens eine aerodynamische Element (2) ein gestanzter Abschnitt des Paneels (1) ist, der mit dem Rest des Paneels (1) gelenkig verbunden ist,
wobei das aerodynamische Element (2) ein mit dem Paneel (1) verbundenes festes Ende (21), wobei das feste Ende (21) eine Steuerlinie (A) definiert, und ein bewegliches Ende (22) aufweist,
**dadurch gekennzeichnet, dass** das aerodynamische Element (2) mindestens einen Längsschlitz (23) aufweist, und dass das feste Ende (21) in eine Vielzahl von Abschnitten unterteilt ist, wobei der mindestens eine Längsschlitz (23) durch die Abschnitte definiert ist, in die das feste Ende (21) unterteilt ist.

2. System zur erneuten Erregung der Anströmung in Steuerflächen von Flugzeugen gemäß Anspruch 1,
wobei das aerodynamische Element (2) in der Einsatzposition einen Ablenkungswinkel (α) in Bezug auf das Paneel definiert.

3. System zur erneuten Erregung der Anströmung in Steuerflächen von Flugzeugen gemäß Anspruch 2,
wobei der Ablenkwinkel (α) variabel ist.

4. System zur erneuten Erregung der Anströmung in Steuerflächen von Flugzeugen gemäß Anspruch 1,
wobei das bewegliche Ende (22) eine spitze Form aufweist.

## Revendications

1. Système de re-énergisation de l'écoulement dans les surfaces de commande d'aéronefs, comprenant un panneau (1) pourvu d'au moins un élément aérodynamique (2), ledit élément aérodynamique (2) étant mobile au moins entre une position de repos, dans laquelle le au moins un élément aérodynamique (2) ne dépasse pas du panneau (1), et une position d'utilisation, dans laquelle le au moins un élément aérodynamique (2) dépasse du panneau (1), agissant comme un générateur de tourbillons, ledit au moins un élément aérodynamique (2) étant une partie découpée dudit panneau (1) qui s'articule sur le reste dudit panneau (1),
dans lequel l'élément aérodynamique (2) comprend une extrémité fixe (21) reliée au panneau (1), ladite extrémité fixe (21) définissant une ligne de commande (A), et une extrémité mobile (22),
**caractérisé en ce que** l'élément aérodynamique (2) comprend au moins une fente longitudinale (23), et **en ce que** l'extrémité fixe (21) est divisée en une pluralité de sections, ladite au moins une fente longitudinale (23) étant définie par lesdites sections en lesquelles est divisée l'extrémité fixe (21).

2. Système de re-énergisation de l'écoulement dans les surfaces de commande d'aéronefs selon la revendication 1, dans lequel dans la position d'utilisation, l'élément aérodynamique (2) définit un angle de déviation (α) par rapport au panneau.

3. Système de re-énergisation de l'écoulement dans les surfaces de commande d'aéronefs selon la revendication 2, dans lequel ledit angle de déviation (α) est variable.

4. Système de re-énergisation de l'écoulement dans les surfaces de commande d'aéronefs selon la revendication 1, dans lequel l'extrémité mobile (22) présente une forme pointue.
